# EUROPEAN PATENT SPECIFICATION

(11) **EP 2 199 943 B1**
(45) Date of publication and mention of the grant of the patent: **04.11.2015**
(21) Application number: 09014619.2
(22) Date of filing: 24.11.2009
(51) Int. Cl.: G06F 21/64, G06F 21/86, G06F 21/72

(54) **Method and apparatus for evidencing a transaction using location information**
Verfahren und Vorrichtung zum Beweisen einer Transaktion mittels Standortinformation
Procédé et appareil d'attestation de transaction utilisant des informations d'emplacement

(30) Priority: 17.12.2008 US 336752
(43) Date of publication of application: 23.06.2010
(73) Proprietor: Pitney Bowes Inc., Danbury, CT 06810 (US)
(72) Inventor: Obrea, Andrei, North Miami Beach, FL 33179 (US); Cordery, Robert A., Monroe, CT 06468 (US); Hammell, Bradley R., Bridgeport, Connecticut 06604 (US); Nawaz, Yassir, Shelton, CT 06484 (US); Ryan, Frederick W., Jr., Oxford, Connecticut 06478 (US)
(74) Representative: Hoffmann Eitle

(56) References cited:
- WO-A2-97/35403
- WO-A2-2008/087435
- WO-A2-2008/142236
- DE-A1- 19 750 522
- US-A1- 2001 033 661

## Description

The present invention relates to transaction evidencing systems, and in particular to an apparatus for providing trusted evidence that a transaction has occurred using location information.

Many transactions either require or would be augmented by the accurate and trusted recording of the location of the transaction. One such application is the calculation of sales and/or use tax for items purchased over the internet. In particular, the proper calculation of such a tax is typically based upon either the location of the sale in the case of a sales tax or the location of the use of the item in the case of a use tax. Normally, the merchant will calculate the tax for transactions based upon the shipping address provided by the purchaser. Unfortunately, with an increasingly mobile society, the increasing sale of digital content, and increasing interest in anonymous digital payment technologies, a shipping address is often incorrect or not provided, thus making the proper calculation of such taxes difficult. Other example transactions that either require or would be augmented by the accurate and trusted recording of the location of the transaction include the notarization of a document, the execution of contracts, and card present payment card transactions. Unfortunately, a simple recording of the location of an event is susceptible to modification and is thus not trustworthy. Accordingly, a system is needed which is able to accurately and securely establish the location of a transaction in a manner which may be trusted by the interested parties.

DE-A-197 50 522 describes an authentication system for electronic data, which comprises, within a secure housing, at least one memory, a processor, a power supply and a data input/output device, as well as a receiver for receiving signals from navigation satellites. Characteristic values are calculated from the data. A signature is then produced from the characteristic values and the received signals.

According to the invention, there is provided an apparatus for evidencing an occurrence of a transaction, comprising: a tamper indicating housing; a processing unit provided within said tamper indicating housing, said processing unit being adapted to: (i) determine current location information indicating a current location of said apparatus, (ii) obtain transaction information relating to said transaction, and (iii) compile a data block including at least said current location information and said transaction information; a cryptographic module provided within said tamper indicating housing, said cryptographic module being adapted to generate cryptographic evidence based on said data block; and an internal navigation module provided within said tamper indicating housing and operatively coupled to said processing unit, said internal navigation module being structured to provide internal navigation data to said processing unit, a GPS receiver provided within said tamper indicating housing and operatively coupled to said processing unit, said GPS receiver being adapted to provide GPS location data to said processing unit, and a mobile phone receiver/transmitter module provided within said tamper indicating housing and operatively coupled to said processing unit, said mobile phone receiver/ transmitter module being adapted to provide mobile phone triangulation location data to said processing unit, wherein said processing unit is adapted to determine said current location information based one of said internal navigation data, said GPS location data and said mobile phone triangulation location data.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, serve to explain the principles of the invention. As shown throughout the drawings, like reference numerals designate like or corresponding parts. In the drawings:
Figure 1 is a block diagram of an apparatus 2 for trusted establishment of the location of a transaction according to one particular embodiment of the present invention;
Figure 2 is a flowchart showing a method of providing trusted evidence that a transaction took place at a particular location according to one particular, non-limiting embodiment of the invention;
Figure 3 is a flowchart of an alternative embodiment of providing trusted evidence that a transaction took place at a particular location according to an alternative embodiment of the invention; and
Figure 4 is a flowchart of a method for continually updating the current location of the apparatus shown in Figure 1 according to one particular embodiment.

As employed herein, the statement that two or more parts or components are "coupled" together shall mean that the parts are joined or operate together either directly or through one or more intermediate parts or components.

As employed herein, the term "number" shall mean one or an integer greater than one (i.e., a plurality).

The following describes an apparatus for evidencing an occurrence of a transaction that includes a tamper indicating housing, a processing unit provided within the tamper indicating housing, and a cryptographic module also provided within the tamper indicating housing. The processing unit is adapted to: (i) determine current location information indicating a current location of the apparatus, (ii) obtain transaction information relating to the transaction, and (iii) compile a data block including at least the current location information and the transaction information. The cryptographic module is adapted to generate cryptographic evidence based on the data block. Preferably, the cryptographic evidence comprises a digital signature of the data block. Also, the cryptographic module is preferably a cryptographic coprocessor operatively coupled to the processing unit that is structured to receive the data block from the processing unit.

The processing unit may also be adapted to obtain current time information, and the data block may further include the current time information. The processing unit may also be adapted to obtain user authentication information, such as biometric information, and the data block may further include the user authentication information.

The apparatus further includes a plurality of location indicating modules provided within the tamper indicating housing, each of the location indicating modules being structured to provide location indicating data to the processing unit, wherein the processing unit is adapted to determine the current location information based on the location indicating data received from one of the location indicating modules. In another particular embodiment, the apparatus further includes an internal navigation module provided within the tamper indicating housing and operatively coupled to the processing unit, the internal navigation module being structured to provide internal navigation data to the processing unit, a GPS receiver provided within the tamper indicating housing and operatively coupled to the processing unit, the GPS receiver being adapted to provide GPS location data to the processing unit, and a mobile phone receiver/transmitter module provided within the tamper indicating housing and operatively coupled to the processing unit, the mobile phone receiver/ transmitter module being adapted to provide mobile phone triangulation location data to the processing unit, wherein the processing unit is adapted to determine the current location information based one of the internal navigation data, the GPS location data and the mobile phone triangulation location data.

In another embodiment, a method of evidencing an occurrence of a transaction is provided that includes securely determining current location information indicating a current location of a party to the transaction, obtaining transaction information relating to the transaction, securely compiling a data block including at least the current location information and the transaction information, and securely generating cryptographic evidence, such as a digital signature, based on the data block. Preferably, the securely determining current location information comprises receiving location indicating data from a plurality of sources and determining the current location information based on the location indicating data received from one of the sources. Also, the plurality of sources preferably includes a GPS source, a mobile phone triangulation source and an internal navigation source. The method may further include obtaining current time information, wherein the data block further includes the current time information, and/or obtaining user authentication information, such as, without limitation, biometric information, wherein the data block further includes the user authentication information.

In another embodiment, an apparatus for evidencing a current location of an individual is provided that includes a tamper indicating housing, one or more I/O devices structured to receive user authentication information from the individual, a processing unit provided within the tamper indicating housing and operatively coupled to the one or more I/O devices, the processing unit being adapted to: (i) determine current location information indicating a current location of the apparatus, (ii) obtain the user authentication information, and (iii) compile a data block including at least the current location information and the user authentication information, and a cryptographic module provided within the tamper indicating housing, the cryptographic module being adapted to generate cryptographic evidence based on the data block. In one particular embodiment, the user authentication information includes biometric information such as a fingerprint, a retinal scan, an image of he individual's face, or a recording of the individual's voice. Preferably, the data block also includes current time information obtained by the processing unit.

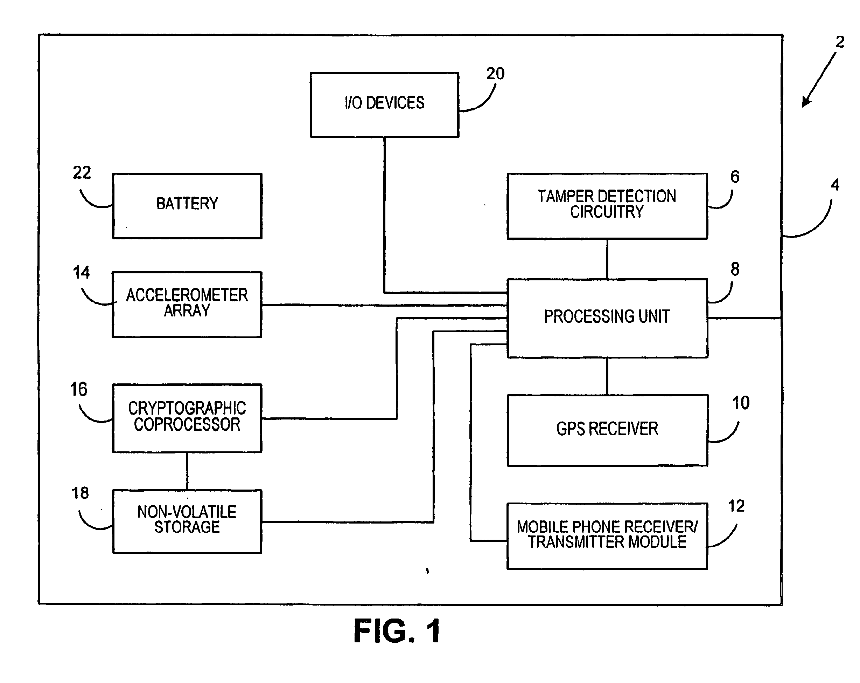

Figure 1 is a block diagram of an apparatus 2 for providing trusted evidence that a transaction has occurred using location information according to one particular embodiment of the present invention. The apparatus 2 includes a housing 4 which comprises a tamper detection envelope operatively coupled to tamper detection circuitry 6 provided within the housing 4. Together, the tamper detection envelope of the housing 4 and the tamper detection circuitry 6 detect efforts to tamper with (e.g., access the contents of) the apparatus 2. A number of different tamper detection methodologies employing a suitable tamper detection envelope and a suitable tamper detection circuitry 6 are known in the art and thus will not be described in detail herein. In short, the tamper detection envelope of the housing 4 and the tamper detection circuitry 6 are provided in order to protect the cryptographic keys included within the cryptographic coprocessor 16 and the location indicating modules, both described in greater detail below, from tampering and to report any such tamper attempts to the processing unit 8, also described below.

As seen in Figure 1, the apparatus 2 includes a processing unit 8, which may include a microprocessor, a microcontroller, or any other suitable processor, which is operatively coupled to a suitable memory for storing routines to be executed by the processing unit 8. Specifically, the memory, which may be separate from and/or internal to the microprocessor, microcontroller or other suitable processor, stores one or more routines for implementing the methods of operation described in greater detail elsewhere herein.

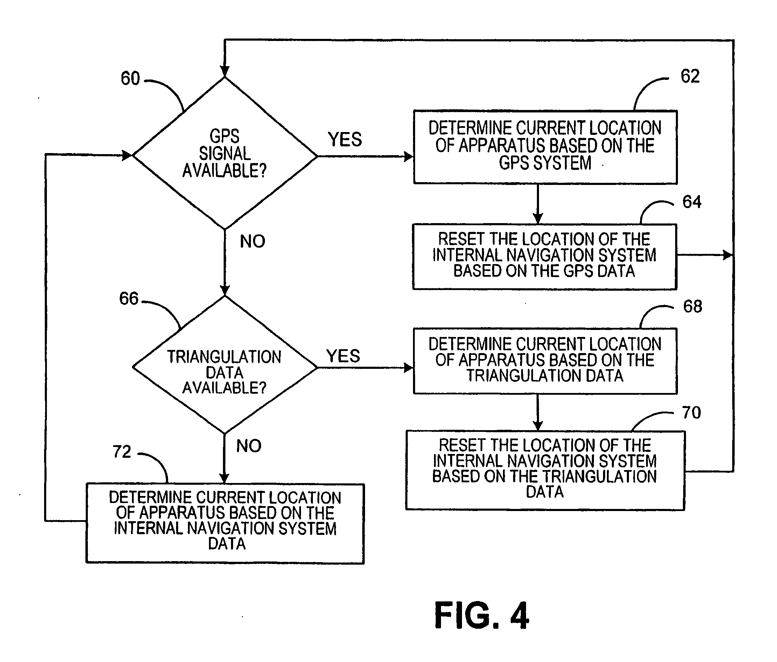

As also described in greater detail herein, the apparatus 2 is adapted to provide evidence of the physical location where a transaction occurred, and does so by establishing its current physical location of the apparatus 2 and digitally signing certain transaction information along with at least the current location information and, preferably, current time information. The digital signature that is created is the evidence that, in a secure and trusted manner, establishes that the transaction took place at the particular location. In the preferred embodiment of the invention, the current location information is established using data relating to the current location of the apparatus 2 based on a combination of one or more of multiple different methods of determining location that are provided as part of the apparatus 2. In the particular, non-limiting embodiment shown in Figure 1, the apparatus 2 employs three different location determination methods, specifically global positioning system (GPS) coordinates, triangulation by multiple mobile phone towers, and internal navigation based upon a form of dead reckoning, which involves calculating position based upon speed, time and direction as derived from a motion based source such as a plurality of accelerometers. Thus, that apparatus 2 shown in Figure 1 includes the following three components which are operatively coupled to the processing unit 8: (i) a GPS receiver 10, a mobile phone receiver/transmitter module 12, which may be a wireless transceiver or separate wireless receiver and transmitter elements, and an accelerometer array 14 including a plurality of accelerometers. The particular manner in which data relating to the current location the apparatus 2 is derived from the outputs received from the GPS receiver 10, the mobile phone receiver/transmitter module 12, and the accelerometer array 14 according to one particular, non-limiting embodiment is described in greater detail elsewhere herein in connection with Figure 4.

Referring again to Figure 1, the apparatus 2 further includes a cryptographic module in the form of a cryptographic coprocessor 16 which stores one or more cryptographic keys and associated cryptographic algorithms (which are executed by the cryptographic coprocessor 16) for encrypting and/or digitally signing data. Specifically, the cryptographic coprocessor 16 in the exemplary embodiment of Figure 1 includes at least a private key of a public/private key pair and suitable algorithms for digitally signing data as described elsewhere herein using the private key of the public/private key pair. The cryptographic coprocessor 16 is operatively coupled to the processing unit 8 for providing data, namely digitally signed data, to the processing unit 8. In an alternative embodiment, the cryptographic module, rather than being in the form of the cryptographic coprocessor 16, may be part of the processing unit 8. The apparatus 2 further includes non-volatile storage 18 which is operatively coupled to both the cryptographic coprocessor 16 and the processing unit 8.

The apparatus 2 further includes a number of I/O devices 20 for inputting information into the apparatus 2 and/or outputting information from the apparatus 2. For example, the I/O devices 20 may include, without limitation, a keyboard or touchscreen for manually inputting information into the apparatus 2, a scanner for scanning data such as documents and creating an image thereof which may later be processed by the processing unit 8 using, for example, optical character recognition (OCR) software, a wireless communications element, such as an RF transceiver or an infrared transceiver, for wirelessly receiving data from an external source such as another electronic device, or a wired connection port, such, without limitation, a USB connection, for receiving data from another source, such as another external electronic device, via a wired connection. The I/O devices 20 may further include a WiFi connection element and/or a broadband connection element for allowing the apparatus 2 to selectively wirelessly connect to the Internet in order to download data from and/or upload data to the Internet. Still further, the I/O devices 20 may include a mechanism for receiving biometric information of a user, such as a fingerprint reading device for scanning fingerprints, a retinal scanning device for generating a retinal scan, or a digital camera for capturing an image of the face of the user. The particular types of I/O devices 20 just described are meant to be exemplary, and it should be understood that other types of I/O devices 20 are also possible. As described in greater detail elsewhere herein, the main purpose of the I/O devices 20 is to enable transaction information relating to the transaction in question (i.e., the one being evidenced) to entered into the apparatus 2 so that it may be further processed as described elsewhere herein.

Finally, the apparatus 2 includes a battery 22 for providing power to the components of the apparatus 2 described above. Preferably, the battery 22 is a rechargeable battery such as, without limitation, a rechargeable lithium ion battery.

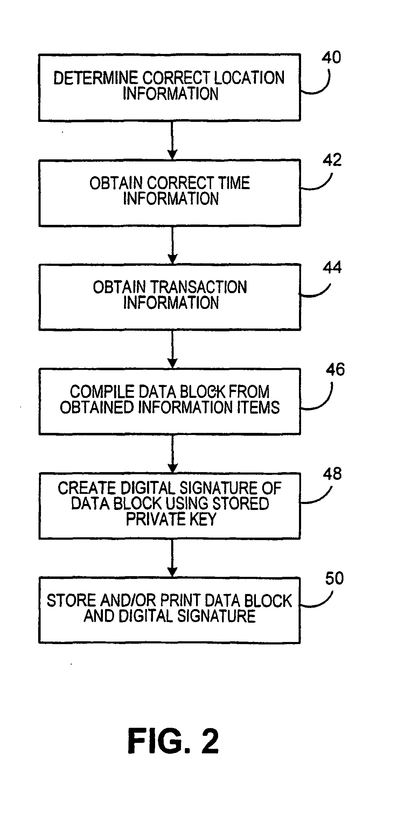

Figure 2 is a flowchart showing a method of providing trusted evidence that a transaction took place at a particular location according to one particular, non-limiting embodiment of the invention. The method shown in Figure 2 is performed by the apparatus 2 at the time that the particular transaction in question, such as, without limitation, a purchase transaction, the signing of a contract, or the notarization of a document, takes place. The method begins at step 40, wherein the processing unit 8 determines current location information which indicates the current physical location of the apparatus 2. In the particular embodiment shown in Figure 2, this current location information is based upon data relating to the current location of the apparatus 2 established from the data that is received by the processing unit 8 from one or more of the GPS receiver 10, the mobile phone receiver/transmitter module 12 and the accelerometer array 14. Preferably, the data relating to the current location of the apparatus 2 is continually updated by the apparatus 2 and is obtained as needed in order to establish the current location information employed in the method shown in Figure 2. One particular method for establishing the data relating to the current location of the apparatus 2 based upon the data outputs received from the GPS receiver 10, the mobile phone receiver/transmitter module 12 and the accelerometer array 14 is described in detail elsewhere herein in connection with Figure 4.

Next, at step 42, the processing unit 8 obtains current time information. In a preferred embodiment, the current time information includes both current date information and current time of day information. In an alternate embodiment, the current time information includes only the current date information. As is known, the GPS signals received by the GPS receiver 10 provide an accurate indication of the current date and current time of day. Thus, when the GPS receiver 10 is receiving GPS signals from the satellite system, the GPS data provided to the processing unit 8 based on the GPS signals may be used to provide the current time information in step 42. However, as is known, there are times wherein, depending upon the particular location of the apparatus 2, the GPS receiver 10 will not be able to receive GPS signals. In order to provide accurate time information in such situations (i.e., where the GPS receiver 10 is not receiving GPS signals), the processing unit 8 is, in the preferred embodiment, provided with an internal free running clock that is used to provide the current time information used in step 42 whenever the GPS receiver 10 is not receiving GPS signals. Preferably, this free running clock is synchronized to the time contained within the GPS data provided by the GPS receiver 10 whenever the GPS receiver 10 is currently receiving GPS signals. In addition, the mobile phone receiver/transmitter module 12 may also receive time information from the mobile phone network to which it is connected. That time information may also be used to synchronize the internal free running clock of the processing unit 8 when the GPS receiver 10 is not receiving GPS signals.

Following step 42, the method proceeds to step 44, wherein transaction information for the current transaction is obtained. Specifically, selected transaction information that is particular to the transaction in question is obtained by the processing unit 8 through one or more of the I/O devices 20. For example, and without limitation, in the case of a purchase transaction, the transaction information may include the amount of the transaction, the payee (e.g., merchant) name or location, and an identification of the items that are purchased. In addition, that information can be manually entered using, for example, a keyboard provided as one of the I/O devices 20, can be obtained by scanning a document, such a receipt, that includes that information using a scanner provided as one of the I/O devices 20 in cooperation with OCR software that is executed by the processing unit 8, can be received wirelessly or via a wired connection through one of the I/O devices 20 from an external electronic device, such as a point-of-sale terminal, or may be downloaded through one of the I/O devices 20 from a website from which the purchase was made. Alternatively, in the case of a transaction that comprises the execution of a contract, the transaction information can include all or part of the contract that is scanned using a scanner provided as one of the I/O devices 20 in cooperation with OCR software executable by the processing unit 8, or that is received wirelessly or via a wired connection from another device through one of the I/O devices 20. As still a further alternative, in the case of a notary transaction, the transaction information may include the one or more documents used for establishing the identity of the signer and/or all or part of the document that is being notarized, and such information may be received in the same manner or manners as the contract information just described. It should be understood that the types of transaction information and the methods for obtaining same just described are meant to be exemplary only and that other suitable types of transaction information and methods of obtaining such transaction information are possible without departing from the scope of the present invention.

Next, at step 46, the processing unit 8 compiles a data block from the obtained information items, namely the current location information obtained in step 40, the current time information obtained in step 42, and the transaction information obtained in step 44. The method then proceeds to step 48, wherein the data block is provided to the cryptographic coprocessor 16 by the processing unit 8. The cryptographic coprocessor 16 then creates a digital signature of the data block using the stored private key. Next, the method proceeds to step 50, wherein the data block and the digital signature of the data block is stored in the nonvolatile storage 18 and/or printed using an external printer through an I/O device 20. For example, the data block and the digital signature may be printed on the contract that is the subject of the transaction or on the document that is being notarized. Furthermore, while in the preferred embodiment both the data block and the digital signature are stored and/or printed, in an alternative embodiment, only the digital signature may be stored and/or printed.

Thus, the method shown in Figure 2 provides trusted evidence in the form of the digital signature that the particular transaction in question took place at a specific current location and at a specific current time. In particular, the trusted evidence is in the form of cryptographic evidence that includes location information, time information and transaction specific information and thus it is particularly useful in facilitating certain transactions which either require or would be augmented by the accurate recording of the location of the transaction, such as, without limitation, e-commerce and legal applications. The evidence is trusted because, as described above, the cryptographic coprocessor 16 (and thus the stored keys), the location indicating modules (the GPS receiver 10, the mobile phone receiver/transmitter module 12 and the accelerometer array 14), and the processing unit 8 are provided within the housing 4 and are thus protected from tampering by the tamper detection envelope of the housing 4 and the tamper detecting circuit 6. Thus, when the digital signature is successfully verified using the public key of the stored public/private key pair, the location and other information that are the subject of the digital signature can be trusted.

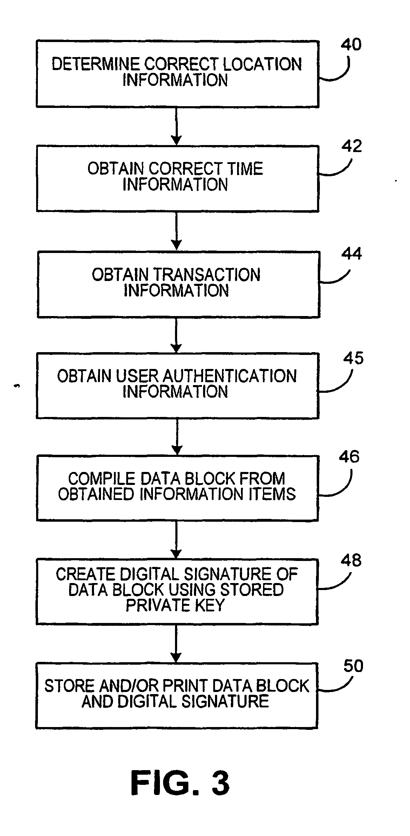

Figure 3 is a flowchart of an alternative embodiment of providing trusted evidence that a transaction took place at a particular location according to an alternative embodiment of the invention. As seen in Figure 3, the method is similar to the method shown in Figure 2 except that it includes an additional step between steps 44 and 48, namely step 45, wherein certain user authentication information is obtained by the apparatus 2. The user authentication information obtained in step 45 may include, for example, and without limitation, certain biometric information of the user of the apparatus 2 obtained through a suitable I/O device 20. Such biometric information may include, without limitation, a fingerprint scan obtained through a suitable scanner, a retinal scan obtained through a suitable scanner, a photograph of the user's face obtained through a digital camera, or a recording (e.g., a digital recording) of the user's voice obtained through a microphone. Alternatively, the user authentication information may include user name/password information or hardware token information obtained through a suitable I/O device 20, wherein that information is unique to the user of the apparatus 2. Following step 45, step 46 in this embodiment includes compiling the data block from the obtained information items including the current location information obtained in step 40, the current time information obtained in step 42, the current transaction information obtained in step 44, and the user authentication information obtained in step 45. A digital signature of that data block is then created in step 48 as described elsewhere herein. Thus, the method shown in Figure 3 will provide cryptographic evidence that further includes user authentication information that is unique to the user of the apparatus 2, i.e., party to the transaction in question.

The method shown in either Figure 2 or Figure 3 and the apparatus 2 shown in Figure 1 may, as noted elsewhere herein, be used for a variety of purposes. For example, the apparatus 2 may be used to determine the appropriate tax jurisdiction for a particular transaction. For instance, if a user who resides in Connecticut rents a digital copy of a movie from a merchant in Michigan while traveling in California, the use tax may be properly calculated for California based upon location information obtained by the apparatus 2 when the rental transaction occurred. As another example, the apparatus 2 and the methods of Figures 2 and 3 may be used to determine the location of contract signatories at the time that a contract was executed. In particular, each signatory may possess an apparatus 2 which obtains the current location information along with transaction information including all or part of the contract at the time that the individual signs the contract. At that time, the apparatus 2 will generate the digital signature as described herein, which includes the current location information, and will either print that information on the contract and/or store that information electronically as described elsewhere herein. As still another example, the apparatus 2 may be used to establish the location of the person at the time that a document that includes that person's signature was notarized. Specifically, during the notarization transaction, the notary will verify the person's identity using, for example, identification such as a driver's license or a passport. The notary may possess an apparatus 2 which obtains the current location where the notarization takes place and generates a digital signature as described elsewhere herein that includes the current location information, the current time information and transaction information including the document to be notarized and/or the identification document used by the signer. The notary may then use the apparatus 2 to cause the digital signature to be printed on the document being notarized and/or to store the digital signature electronically for later use. In yet another example, a person carrying the apparatus can use it to create evidence of their presence (or absence) at a certain location and preferably time obtained by the apparatus 2 as described herein (i.e., person is alone and there is no other transaction involved). In this case, the evidence would preferably also be based on biometric information of the person obtained as described elsewhere herein. This proof in itself could be useful for many purposes including legal ones.

As described elsewhere herein, the apparatus 2 employs several methods/modules for determining the location of the apparatus 2. Those methods include GPS (the location indicating module comprising the GPS receiver 10), triangulation by multiple phone towers (the location indicating module comprising the mobile phone receiver/transmitter module 12) and internal navigation (the location indicating module comprising accelerometer array 14) using a form of dead reckoning by calculating position in the processing unit 8 based upon speed, time and direction data (the location indicating module comprising accelerometer array 14). However, each of these three systems of obtaining location information has its shortcomings. In particular, GPS is very accurate but relies upon the reception of satellite signals which may be too weak to be used within certain structures such as buildings. Triangulation based upon signals received from multiple mobile phone towers employs signal timing and strength that is less accurate than GPS. The signals, however, may be able to be used within buildings where a GPS signal is not able to be received. Internal navigation as just described requires no external input and therefore may be used deep within a structure such as a building. However, small positioning errors build up over time and such positional errors, if not corrected, may produce unreliable positioning information.

In order to overcome the shortcomings particular to each of the three location determining methodologies just described, the present invention, according to one particular embodiment, employs all three methodologies in the apparatus 2 and processes the data according to the method shown in Figure 4 in order to obtain and continually update data relating to the current location of the apparatus 2, which data may then be used to establish the current location information that is employed in step 40 in Figures 2 and 3. The method of Figure 4 contemplates that the GPS receiver 10 will provide GPS data indicating the current location to the processing unit 8 when GPS signals are available, that the mobile phone receiver/transmitter module 12 will provide triangulation data indicating the current location to the processing unit 8 when mobile phone signals are available, and that the processing unit 8 will operate an internal navigation system which tracks location using a form of dead reckoning based upon data provided to the processing unit 8 by the accelerometer array 14. As described in greater detail below, the processing unit 8, according to the method shown in Figure 4, will determine which source of location data is to be used to determine the current location of the apparatus 2, which updated current location, as described above, will be used as needed to establish the current location information of steps 40 in Figures 2 and 3.

The method beings at step 60, wherein a determination is made as to whether a GPS signal is available to the GPS receiver 10. In particular, the processing unit 8 will determine whether it is able to receive current GPS data from the GPS receiver 10. If the answer is yes, then, at step 62, the current location of the apparatus 2 is determined based upon the GPS data received from the GPS receiver 10. Next, at step 64, the current location of the internal navigation system is reset based on the current GPS data. This step corrects for errors that may occur and build up over time in the internal navigation system as described elsewhere herein. Following step 64, the method returns to step 60. If the answer at step 60 is no, meaning that the GPS signal is not currently available, then, at step 66, a determination is made as to whether triangulation data indicating the current location based upon triangulation by multiple mobile phone towers is available. The actual triangulation may take place within the mobile phone receiver/transmitter module 12 (or, alternatively, within the processing unit 8 based upon data received from the mobile phone receiver/transmitter module 12), or by a mobile service provider as a third party service, in which case the triangulation data indicating the current location will be transmitted to the apparatus 2 through the mobile phone receiver/transmitter module 12. If the answer at step 66 is yes, then, at step 68, the current location of the apparatus 2 is determined based upon the current triangulation data that is present in the processing unit 8. Next, at step 70, the location of the internal navigation system is reset based on the current triangulation data present in the processing unit 8. Again, as was the case in step 40, step 70 resets the internal navigation system location in order to compensate for errors that may have built up over time in the internal navigation system. Following step 70, the method returns to step 60. If the answer at step 66 is no, meaning that neither the GPS data nor the triangulation data is available, then the method proceeds to step 72, wherein the current location of the apparatus 2 is determined based on the current data of the internal navigation system. The method then returns to step 60.

As just described, in one embodiment three methods for establishing current location are specified along with their selection criteria. In addition, input from all three (GPS, cell towers, internal navigation) can be used to detect GPS/cell tower signal spoofing. If there is a big discrepancy in their readings, the apparatus 2 can warn user or lock itself.

As a further alternative, an additional location indicating module may comprise manual entry of location using one of the I/O devices 20. This type of entry might be useful if the GPS/cell tower location systems do not work (no connection) for a longer period of time. In such a case, instead of trusting the internal navigation system which might have accumulated too many errors to be relied upon, the manually entered location will be used. For example, the user can be presented with an internal map of the "guessed region" on one of the I/O devices 20 (e.g., a touch screen), and do his/her own corrections (or confirmation) of location.

Furthermore, in one particular embodiment, meta-data is preferably included in the location information used to create the digital signature which indicates the way the location information used to create the digital signature was gathered (all 3 location methods, only the internal navigation, the internal navigation plus the user entered data, etc.)

While preferred embodiments of the invention have been described and illustrated above, it should be understood that these are exemplary of the invention and are not to be considered as limiting. Accordingly, the invention is not to be considered as limited by the foregoing description but is only limited by the scope of the appended claims.

## Claims

1. An apparatus (2) for evidencing an occurrence of a transaction, comprising:
a tamper indicating housing (4);
a processing unit (8) provided within said tamper indicating housing (4), said processing unit (8) being adapted to: (i) determine (40) current location information indicating a current location of said apparatus, (ii) obtain (44) transaction information relating to said transaction, and (iii) compile (46) a data block including at least said current location information and said transaction information;
a cryptographic module (16) provided within said tamper indicating housing, said cryptographic module being adapted to generate cryptographic evidence based on said data block; and
an internal navigation module (14) provided within said tamper indicating housing (4) and operatively coupled to said processing unit (8), said internal navigation module (14) being structured to provide internal navigation data to said processing unit, a GPS receiver (10) provided within said tamper indicating housing and operatively coupled to said processing unit (8), said GPS receiver (10) being adapted to provide GPS location data to said processing unit (8), and a mobile phone receiver/transmitter module (12) provided within said tamper indicating housing and operatively coupled to said processing unit (8), said mobile phone receiver/ transmitter module (12) being adapted to provide mobile phone triangulation location data to said processing unit (8), wherein said processing unit (8) is adapted to determine said current location information based on one of said internal navigation data, said GPS location data and said mobile phone triangulation location data.

2. The apparatus according to claim 1, wherein said cryptographic evidence comprises a digital signature of said data block.

3. The apparatus according to claim 2, wherein said cryptographic module (16) stores a private key of a public/private key pair and is adapted to generate said digital signature of said data block using said private key.

4. The apparatus according to any preceding claim, wherein said cryptographic module is a cryptographic coprocessor (16) operatively coupled to said processing unit (8), said cryptographic coprocessor being structured to receive said data block from said processing unit.

5. The apparatus according to any preceding claim, wherein said internal navigation module comprises an accelerometer array (14), wherein said internal navigation data comprises accelerometer data, wherein said processing unit (8) is adapted to generate internal navigation location data based on said accelerometer data, and wherein said processing unit (8) is adapted to determine said current location information based on one of said internal navigation location data, said GPS location data and said mobile phone triangulation location data.

6. The apparatus according to any preceding claim, wherein said tamper indicating housing (4) includes a tamper detection envelope, and wherein said apparatus further comprises a tamper detection circuit (6) provided within and operatively coupled to said tamper detection envelope for detecting attempts to tamper with said apparatus.

7. The apparatus according to any preceding claim, wherein said processing unit (8) is adapted to obtain current time information, and wherein said data block further includes said current time information.

8. The apparatus according to any preceding claim, wherein said processing unit (8) is adapted to obtain user authentication information, and wherein said data block further includes said user authentication information.

9. The apparatus according to any preceding claim, wherein said user authentication information comprises biometric information.

10. The apparatus according to any preceding claim, further comprising one or more I/O devices (20) operatively coupled to said processing unit (8), said one or more I/O devices (20) being structured to receive said transaction information.

11. The apparatus according to claim 10, further comprising one or more I/O devices (20) operatively coupled to said processing unit, said one or more I/O devices being structured to receive location information, said current location information indicating a current location of said apparatus being based on said received location information.

## Patentansprüche

1. Vorrichtung (2) zum Nachweisen eines Auftretens einer Transaktion, umfassend:
ein manipulationsanzeigendes Gehäuse (4);
eine Verarbeitungseinheit (8), die in dem manipulationsanzeigenden Gehäuse (4) bereitgestellt ist, wobei die Verarbeitungseinheit (8) ausgebildet ist zum: (i) Bestimmen (40) einer gegenwärtigen Standortinformation, die einen gegenwärtigen Standort der Vorrichtung anzeigt, (ii) Erhalten (44) einer Transaktionsinformation in Bezug auf die Transaktion, und (iii) Zusammenstellen (46) eines Datenblocks mit zumindest der gegenwärtigen Standortinformation und der Transaktionsinformation;
ein kryptographisches Modul (16), das in dem manipulationsanzeigenden Gehäuse bereitgestellt ist, wobei das kryptographische Modul ausgebildet ist zum Erzeugen eines kryptographischen Nachweises auf Grundlage des Datenblocks; und
ein internes Navigationsmodul (14), das in dem manipulationsanzeigenden Gehäuse (4) bereitgestellt ist, und mit der Verarbeitungseinheit (8) funktionsfähig gekoppelt ist, wobei das interne Navigationsmodul (14) strukturiert ist zur Bereitstellung von internen Navigationsdaten an die Verarbeitungseinheit, einen GPS-Empfänger (10), bereitgestellt in dem manipulationsanzeigenden Gehäuse und funktionsfähig mit der Verarbeitungseinheit (8) gekoppelt, wobei der GPS-Empfänger (10) ausgebildet ist zur Bereitstellung von GPS-Standortdaten für die Verarbeitungseinheit (8), und ein Mobiltelefon-Empfangs/Sendemodul (12), bereitgestellt in dem manipulationsanzeigenden Gehäuse und funktionsfähig gekoppelt mit der Verarbeitungseinheit (8), wobei das Mobiltelefon-Empfangs/Sendemodul (12) ausgebildet ist zur Bereitstellung von Mobiltelefon-Triangulationsstandortdaten an die Verarbeitungseinheit (8), wobei die Verarbeitungseinheit (8) ausgebildet ist zum Bestimmen der gegenwärtigen Standortinformation auf Grundlage von einem von den internen Navigationsdaten, den GPS-Standortdaten und den Mobiltelefon-Triangulationsstandortdaten.

2. Vorrichtung nach Anspruch 1, wobei der kryptographische Nachweis eine digitale Signatur des Datenblocks umfasst.

3. Vorrichtung nach Anspruch 2, wobei das kryptographische Modul (16) einen privaten Schlüssel von einem öffentlichen/privaten Schlüsselpaar speichert und ausgebildet ist zum Erzeugen der digitalen Signatur des Datenblocks unter Verwendung des privaten Schlüssels.

4. Vorrichtung nach einem der vorhergehenden Ansprüche, wobei das kryptographische Modul ein kryptographischer Coprozessor (16) ist, der funktionsfähig mit der Verarbeitungseinheit (8) gekoppelt ist, wobei der kryptographische Coprozessor strukturiert ist zum Empfangen des Datenblocks von der Verarbeitungseinheit.

5. Vorrichtung nach einem der vorhergehenden Ansprüche, wobei das interne Navigationsmodul eine Beschleunigungsmessanordnung (14) umfasst, wobei die internen Navigationsdaten Beschleunigungsdaten umfassen, wobei die Verarbeitungseinheit (8) ausgebildet ist zum Erzeugen von internen Navigationsstandortdaten auf Grundlage der Beschleunigungsdaten, und wobei die Verarbeitungseinheit (8) ausgebildet ist zum Bestimmen der gegenwärtigen Standortinformation auf Grundlage von einem von den internen Navigationsstandortdaten, den GPS-Standortdaten und den Mobiltelefon-Triangulationsstandortdaten.

6. Vorrichtung nach einem der vorhergehenden Ansprüchen, wobei das manipulationsanzeigende Gehäuse (4) eine Manipulationsdetektionshülle enthält, und wobei die Vorrichtung ferner eine Manipulationsdetektionsschaltung (6) umfasst, die in der Manipulationsdetektionshülle bereitgestellt ist, und mit dieser funktionsfähig gekoppelt ist, zum Detektieren von Versuchen einer Manipulation der Vorrichtung.

7. Vorrichtung nach einem der vorhergehenden Ansprüche, wobei die Verarbeitungseinheit (8) ausgebildet ist zum Erhalten einer gegenwärtigen Zeitinformation, und wobei der Datenblock ferner die gegenwärtige Zeitinformation enthält.

8. Vorrichtung nach einem der vorhergehenden Ansprüche, wobei die Verarbeitungseinheit (8) ausgebildet ist zum Erhalten einer Nutzerauthentifizierungsinformation, und wobei der Datenblock ferner die Nutzerauthentifizierungsinformation enthält.

9. Vorrichtung nach einem der vorhergehenden Ansprüche, wobei die Nutzerauthentifizierungsinformation eine biometrische Information umfasst.

10. Vorrichtung nach einem der vorhergehenden Ansprüche, ferner mit einer oder mehreren I/O-Vorrichtungen (20), die funktionsfähig mit der Verarbeitungseinheit (8) gekoppelt sind, wobei die eine oder die mehreren I/O-Vorrichtungen (20) strukturiert sind zum Empfangen der Transaktionsinformation.

11. Vorrichtung nach Anspruch 10, ferner mit einer oder mehreren I/O-Vorrichtungen (20), die mit der Verarbeitungseinheit funktionsfähig gekoppelt sind, wobei die eine oder die mehreren I/O-Vorrichtungen strukturiert sind zum Empfangen einer Standortinformation, wobei die gegenwärtige Standortinformation einen gegenwärtigen Standort der Vorrichtung anzeigt, die auf der empfangenen Standortinformation basiert.

## Revendications

1. Appareil (2) permettant de mettre en évidence une occurrence d'une transaction, comprenant :
un logement indicateur de fraude (4) ;
une unité de traitement (8) prévue à l'intérieur dudit logement indicateur de fraude (4), ladite unité de traitement (8) étant adaptée pour : (i) déterminer (40) des informations d'emplacement actuel indiquant un emplacement actuel dudit appareil, (ii) obtenir (44) des informations de transaction relatives à ladite transaction, et (iii) compiler (46) un bloc de données comportant au moins lesdites informations d'emplacement actuel et lesdites informations de transaction ;
un module cryptographique (16) prévu à l'intérieur dudit logement indicateur de fraude, ledit module cryptographique étant adapté pour générer une preuve cryptographique sur la base dudit bloc de données ; et
un module de navigation interne (14) prévu à l'intérieur dudit logement indicateur de fraude (4) et couplé de manière opérationnelle à ladite unité de traitement (8), ledit module de navigation interne (14) étant structuré pour fournir des données de navigation interne à ladite unité de traitement, un récepteur GPS (10) prévu à l'intérieur dudit logement indicateur de fraude et couplé de manière opérationnelle à ladite unité de traitement (8), ledit récepteur GPS (10) étant adapté pour fournir des données d'emplacement GPS à ladite unité de traitement (8), et un module récepteur/émetteur de téléphone mobile (12) prévu à l'intérieur dudit logement indicateur de fraude et couplé de manière opérationnelle à ladite unité de traitement (8), ledit module récepteur/émetteur de téléphone mobile (12) étant adapté pour fournir des données d'emplacement de triangulation de téléphone mobile à ladite unité de traitement (8), où ladite unité de traitement (8) est adaptée pour déterminer lesdites informations d'emplacement actuel sur la base de l'une parmi lesdites données de navigation interne, lesdites données d'emplacement GPS et lesdites données d'emplacement de triangulation de téléphone mobile.

2. Appareil selon la revendication 1, dans lequel ladite preuve cryptographique comprend une signature numérique dudit bloc de données.

3. Appareil selon la revendication 2, dans lequel ledit module cryptographique (16) stocke une clé privée d'une paire de clés public/privée et est adapté pour générer ladite signature numérique dudit bloc de données en utilisant ladite clé privée.

4. Appareil selon l'une des revendications précédentes, dans lequel ledit module cryptographique est un coprocesseur cryptographique (16) couplé de manière opérationnelle à ladite unité de traitement (8), ledit coprocesseur cryptographique étant structuré pour recevoir ledit bloc de données à partir de ladite unité de traitement.

5. Appareil selon l'une des revendications précédentes, dans lequel ledit module de navigation interne comprend un réseau d'accéléromètres (14), dans lequel lesdites données de navigation interne comprennent des données d'accéléromètre, dans lequel ladite unité de traitement (8) est adaptée pour générer des données d'emplacement de navigation interne sur la base desdites données d'accéléromètre, et dans lequel ladite unité de traitement (8) est adaptée pour déterminer lesdites informations d'emplacement actuel sur la base de l'une parmi lesdites données d'emplacement de navigation interne, lesdites données d'emplacement GPS et lesdites données d'emplacement de triangulation de téléphone mobile.

6. Appareil selon l'une des revendications précédentes, dans lequel ledit logement indicateur de fraude (4) comporte une enveloppe de détection de fraude, et dans lequel ledit appareil comprend en outre un circuit de détection de fraude (6) prévu à l'intérieur de ladite enveloppe de détection de fraude et couplé de manière opérationnelle à celle-ci pour détecter des tentatives de fraude avec ledit appareil.

7. Appareil selon l'une des revendications précédentes, dans lequel ladite unité de traitement (8) est adaptée pour obtenir des informations temporelles actuelles, et dans lequel ledit bloc de données comporte en outre lesdites informations temporelles actuelles.

8. Appareil selon l'une des revendications précédentes, dans lequel ladite unité de traitement (8) est adaptée pour obtenir des informations d'authentification d'utilisateur, et dans lequel ledit bloc de données comporte en outre lesdites informations d'authentification d'utilisateur.

9. Appareil selon l'une des revendications précédentes, dans lequel lesdites informations d'authentification d'utilisateur comprennent des informations biométriques.

10. Appareil selon l'une des revendications précédentes, comprenant en outre un ou plusieurs dispositif(s) d'E/S (20) couplé(s) de manière opérationnelle à ladite unité de traitement (8), ledit/lesdits un ou plusieurs dispositif(s) d'E/S (20) étant structuré(s) pour recevoir lesdites informations de transaction.

11. Appareil selon la revendication 10, comprenant en outre un ou plusieurs dispositif(s) d'E/S (20) couplé(s) de manière opérationnelle à ladite unité de traitement, ledit/lesdits un ou plusieurs dispositif(s) d'E/S étant structuré(s) pour recevoir des informations d'emplacement, lesdites informations d'emplacement actuel indiquant un emplacement actuel dudit appareil en se basant sur lesdites informations d'emplacement reçues.
